# EUROPÄISCHE PATENTSCHRIFT

(11) **EP 3 186 527 B1**
(45) Veröffentlichungstag und Bekanntmachung des Hinweises auf die Patenterteilung: **17.07.2019**
(21) Anmeldenummer: 15762513.8
(22) Anmeldetag: 26.08.2015
(51) Int. Cl.: B23B 31/117, B25B 23/00, F16F 3/02, F16F 1/368

(54) **KNICKFEDEREINRICHTUNG**
BENDING SPRING DEVICE
DISPOSITIF DE RESSORT À CINTRER

(30) Priorität: 29.08.2014 DE 102014112479
(43) Veröffentlichungstag der Anmeldung: 05.07.2017
(73) Patentinhaber: Technische Universität Darmstadt, 64289 Darmstadt (DE)
(72) Erfinder: SCHÜRMANN, Helmut, 67133 Maxdorf (DE); KLIMACH, Martin, 64287 Darmstadt (DE)
(74) Vertreter: Habermann Intellectual Property Partnerschaft von Patentanwälten mbB
(86) Internationale Anmeldenummer: PCT/EP2015/069520
(87) Internationale Veröffentlichungsnummer: WO 2016/030411

(56) Entgegenhaltungen:
- EP-A1- 0 412 334
- AT-U1- 8 191
- US-A- 3 272 492
- US-A- 4 801 019

## Beschreibung

Die Erfindung betrifft eine Knickfedereinrichtung mit einer ersten ringförmigen Aufnahmeeinrichtung und mit einer längs einer Mittenachse der Knickfedereinrichtung beabstandet angeordneten zweiten Aufnahmeeinrichtung, zwischen denen mehrere Knickstäbe konzentrisch um die Mittenachse angeordnet sind, wobei jeder Knickstab an seinen beiden Enden jeweils in einer zugeordneten Lagereinrichtung in den Aufnahmeeinrichtungen festgelegt ist und wobei bei einer axialen Druckbelastung der Knickfedereinrichtung die Knickstäbe elastisch seitlich ausknicken.

Es ist bekannt, dass ein Knickstab bei einer in axialer Richtung auf den Knickstab einwirkenden Druckbelastung zunächst bei einer vergleichsweise geringen Verformung stark ansteigende Rückstellkräfte erzeugt. Sobald die Druckbelastung einen Schwellenwert übersteigt, knickt der Knickstab seitlich aus und verformt sich zunehmend stärker, wobei die durch die zunehmende seitliche Auslenkung bzw. Deformation des Knickstabs bewirkte Rückstellkraft lediglich geringfügig ansteigt und näherungsweise konstant bleibt. Ein geeigneter Knickstab mit einem ausreichend elastischen Verformungsverhalten eignet sich zur Verwendung in einer Federeinrichtung, wobei der Federweg und die Federkraft durch die Anordnung und Ausgestaltung des Knickstabs vorgegeben werden kann.

Aus DE 41 10 598 C2 ist eine Knickfedereinrichtung mit einem Knickstab oder mit mehreren in Reihe angeordneten Knickstäben bekannt. In den Druckschriften US4801019A US3272492A sind weitere Ausführungsformen von solchen Vorrichtungen gezeigt.

Für viele Anwendungen ist der für die Federeinrichtung erforderliche Bauraum ein wichtiges Kriterium. Dabei ist es regelmäßig vorteilhaft, wenn die Federeinrichtung einerseits einen großen Federweg und eine große Federwirkung ermöglicht, andererseits jedoch nur einen möglichst geringen Bauraum beanspruchen muss.

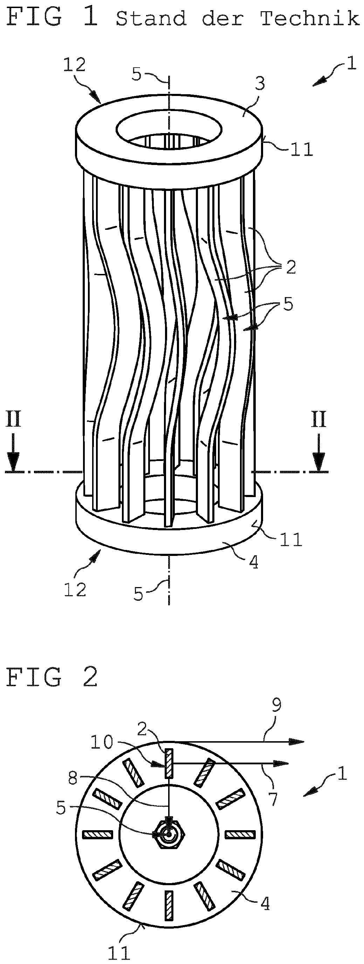

Aus der US-Patentschrift US 4,801,019 sind auf zug- und auf druckbelastbare Knickfedereinrichtungen bekannt, bei denen jeweils mehrere Knickstäbe konzentrisch um eine Mittenachse der Knickfedereinrichtung angeordnet sind und zwischen zwei ringförmigen Aufnahmeeinrichtungen festgelegt sind. Eine Ausgestaltung der in dieser US-Patentschrift beschriebenen Knickfedereinrichtungen ist in den Fig. 1 und 2 exemplarisch dargestellt. Die streifenförmigen Knickstäbe sind in Umfangsrichtung so beabstandet zueinander angeordnet, dass jeweils benachbarte Knickstäbe auch bei einer durch eine übliche Druckbelastung erzwungenen seitlichen Auslenkung nicht miteinander kollidieren oder sich berühren können. Die einzelnen Knickstäbe sind in den ringförmigen Aufnahmeeinrichtungen so angeordnet und ausgerichtet, dass für jeden Knickstab dessen Knickrichtung, in der die seitliche Auslenkung bei einer Druckbelastung erfolgt, parallel zu einer Tangentenrichtung verläuft, die einer Tangente durch einen zu dem betreffenden Knickstab nächstliegenden Punkt auf der äußeren Umfangslinie der Aufnahmeeinrichtung entspricht. Bei einer Druckbelastung werden die einzelnen Knickstäbe bei der aus dem Stand der Technik bekannten Knickfedereinrichtung seitlich ausgelenkt und ragen bereits bei einem kurzen Federweg der Knickfedereinrichtung seitlich über eine durch die ringförmigen Aufnahmeeinrichtungen vorgegebene Grundfläche hinaus. Der für eine derartige Knickfedereinrichtung erforderliche Bauraum ist demzufolge größer als die durch die ringförmigen Aufnahmevorrichtungen vorgegebene Grundfläche.

Durch eine in einem ausreichend großen Abstand zu einer äußeren Umfangslinie der Aufnahmeeinrichtungen erfolgende Anordnung der einzelnen Knickstäbe kann erreicht werden, dass auch bei einem großen Federweg, also bei einer großen seitlichen Auslenkung der Knickstäbe, die maximal seitlich ausgelenkten Bereiche der Knickstäbe nicht über die äußere Umfangslinie hinausragen. Da die einzelnen Knickstäbe dann jedoch näher an der Mittenachse der Knickfedereinrichtung angeordnet werden müssen, reduziert sich der in Umfangsrichtung gemessene Abstand zwischen den einzelnen Knickstäben, so dass der maximale Federweg der Knickfedereinrichtung reduziert bzw. beschränkt ist. Zudem wird ein zylinderförmiger Innenraum längs der Mittenachse der Knickfedereinrichtung, der für die Anordnung und insbesondere für die seitliche Auslenkung der Knickstäbe nicht benötigt wird und deshalb anderweitig genutzt werden könnte, durch eine zunehmend zentrumsnahe Anordnung der einzelnen Knickstäbe erheblich reduziert.

Es wird deshalb als eine Aufgabe der folgenden Erfindung angesehen, eine Knickfedereinrichtung der eingangs genannten Gattung so auszugestalten, dass eine möglichst hohe Federwirkung und ein möglichst großer Federweg in axialer Richtung bei einem möglichst geringen Einbauraum zur Verfügung gestellt werden.

Diese Aufgabe wird erfindungsgemäß dadurch gelöst, dass durch eine Ausgestaltung der Knickstäbe und durch eine davon abhängige Ausgestaltung der Lagereinrichtungen in den Aufnahmevorrichtungen die seitliche Auslenkung der Knickstäbe beim Ausknicken innerhalb eines für die unbelastete Knickfedereinrichtung erforderlichen Einbauraums erfolgt. Da die einzelnen Knickstäbe beim Ausknicken nicht seitlich über eine durch die ringförmigen Aufnahmeeinrichtungen vorgegebene Grundfläche hinausragen, wird der für die Knickfedereinrichtung benötigte Einbauraum durch die unbelastete Knickfedereinrichtung vorgegeben und kein zusätzlicher Einbauraum für eine bestimmungsgemäße Verwendung der Knickfedereinrichtung bzw. für die seitliche Auslenkung der Knickstäbe beim Ausknicken benötigt.

Gemäß einer besonders vorteilhaften Ausgestaltung des Erfindungsgedankens ist vorgesehen, dass die seitliche Auslenkung jedes Knickstabs in einer Knickrichtung erfolgt, die in einem Winkelbereich zwischen einer von einer Mittenachse des Knickstabs radial nach innen zur Mittenachse der Knickfedereinrichtung gerichteten Zentrumsrichtung und einer durch einen zur Mittenachse des Knickstabs nächstliegenden Punkts einer äußeren Umfangslinie der Aufnahmeeinrichtung tangential verlaufenden Tangentenrichtung verläuft. Die Knickrichtung ist demzufolge zweckmäßigerweise so vorgegeben, dass die Knickrichtung nicht in der zu einem benachbarten Bereich der äußeren Umfangslinie der Aufnahmeeinrichtung tangentialen Richtung verläuft. In diesem Fall, der bereits aus dem Stand der Technik bekannt ist, würde der Knickstab bereits bei einer geringfügigen seitlichen Auslenkung seitlich über die äußere Umfangslinie bzw. über die Grundfläche der Aufnahmeeinrichtung hinausragen. Weiterhin ist die Knickrichtung auch nicht radial nach innen gerichtet, da in diesem Fall benachbarte Knickstäbe bereits bei einer geringen Auslenkung in ihren mittleren Bereichen aufeinander zubewegt werden und miteinander kollidieren. Durch die Vorgabe der Knickrichtung in einem Winkelbereich zwischen der Tangentenrichtung und der Zentrumsrichtung kann eine vergleichsweise große seitliche Auslenkung der Knickstäbe innerhalb der durch die Aufnahmeeinrichtungen vorgegebenen Grundfläche ermöglicht werden, ohne dass eine unerwünschte Berührung oder Kollision benachbarter Knickstäbe befürchtet werden muss. Gleichzeitig können die einzelnen Knickstäbe in Umfangsrichtung einen großen Abstand zueinander aufweisen.

Einer Ausgestaltung des Erfindungsgedankens zufolge ist vorgesehen, dass die Knickrichtung in einem Winkelbereich zwischen 20° und 70°, vorzugsweise zwischen 30° und 50° zwischen der Tangentenrichtung und der Zentrumsrichtung verläuft. Die Vorgabe der Knickrichtung für jeden Knickstab in diesem Winkelbereich ermöglicht besonders vorteilhafte Eigenschaften der Knickfedereinrichtung und insbesondere einen geringen Einbauraum bei günstigen Federeigenschaften der Knickfedereinrichtung.

Der für die Knickfedereinrichtung erforderliche Einbauraum kann in vorteilhafterweise dadurch weiter reduziert werden, dass die beiden Aufnahmeeinrichtungen Stirnflächen eines Hohlzylinders bilden und die seitliche Auslenkung der Knickstäbe innerhalb des Hohlzylinders erfolgt, so dass dessen Innenradius bei einem vorgegebenen Außenradius möglichst groß ist. Die Knickrichtung der einzelnen Knickstäbe kann zu diesem Zweck in Abhängigkeit von der Anzahl und Ausgestaltung der konzentrisch um die Mittenachse der Knickfedereinrichtung angeordneten Knickstäbe so vorgegeben werden, dass jeder einzelne Knickstab bei einer maximal zulässigen Ausknickung bzw. seitlichen Auslenkung gerade bis an den Außenradius des Hohlzylinders heranragt. Gleichzeitig werden die in dieser Knickrichtung ausgelenkten Knickstäbe möglichst wenig in Richtung der Mittenachse der Knickfedereinrichtung ausgelenkt, so dass der Innenradius des Hohlzylinders groß ist und ein zur Mittenachse der Knickfedereinrichtung koaxialer Zylinderraum in dem Inneren des Hohlzylinders nicht von der Knickfedereinrichtung benötigt wird. In diesem zylindrischen Innenraum können beispielsweise eine Welle oder ein Bolzen eines Bauteils angeordnet sein, an dem die Knickfedereinrichtung festgelegt oder gelagert ist.

Zweckmäßigerweise ist vorgesehen, dass jede Lagereinrichtung der einzelnen Knickstäbe bis an eine äußere Umfangslinie der zugeordneten Aufnahmeeinrichtung ragt. Auf diese Weise können die einzelnen Knickstäbe möglichst weit außen und nahe der äußeren Umfangslinie der Aufnahmeeinrichtungen angeordnet sein, so dass der zur Verfügung stehende Bauraum möglichst gut ausgenutzt werden kann.

Die Knickstäbe können beispielsweise aus einem geeigneten Metall oder aus einem Kunststofffaserverbundmaterial hergestellt sein. Einer vorteilhaften Ausgestaltung des Erfindungsgedankens zufolge ist vorgesehen, dass die Knickstäbe streifenförmig ausgestaltet sind und in ihren beiden Endbereichen jeweils eine gleichbleibende quaderförmige Querschnittsfläche aufweisen. Derartige Knickstäbe lassen sich aus verschiedenen Materialien besonders einfach und kostengünstig herstellen. Zudem weisen streifenförmige Knickstäbe mit einer gleichbleibenden Querschnittsfläche eine vorteilhafte Ausknickcharakteristik auf. Durch die streifenförmige Formgebung sind bereits zwei in entgegengesetzte Richtungen gerichtete Knickrichtungen beschränkt und vorgegeben, wobei durch einfache Mittel die jeweils gewünschte Knickrichtung eindeutig vorgegeben werden kann.

Zu diesem Zweck ist beispielsweise vorgesehen, dass jeder Knickstab mindestens abschnittsweise längs der Mittenachse eine Krümmung oder Verdickung aufweist, durch welche die Knickrichtung vorgegeben wird. Durch eine geeignete Formgebung der Knickstäbe kann deren Knickrichtung in einfacher Weise und kostengünstig vorgegeben werden. Zudem können durch eine geeignete Formgebung die Federeigenschaften der Knickstäbe und damit auch der Knickfedereinrichtung in vorteilhafter Weise beeinflusst werden.

Es ist ebenfalls möglich und für verschiedene Anwendungen zweckmäßig, dass die Lagereinrichtungen in einem der Knickrichtung gegenüberliegenden Umfangsbereich jeweils ein seitlich an dem zugeordneten Knickstab anliegendes Anschlagelement aufweisen, das eine seitliche Auslenkung des Knickstabs in dieser Richtung verhindert. Durch eine geeignete Ausgestaltung und Formgebung der einzelnen Lagereinrichtungen kann nicht nur die Auslenkung der Knickstäbe in einer unerwünschten Richtung verhindert werden, sondern auch in einfacher und kostengünstiger Weise die gewünschte Knickrichtung zuverlässig vorgegeben werden. Zu diesem Zweck kann jede Lagereinrichtung abschnittsweise einen hohen Seitenwandbereich und in Knickrichtung einen niedrigen Seitenwandbereich aufweisen, so dass entlang mindestens einer halben Umfangslinie der einzelnen Knickstäbe eine hohe eng anliegende Seitenwand ein Ausknicken des betreffenden Knickstabs in diese Richtung verhindert, während auf einer entgegengesetzten Seite durch einen niedrigen Seitenwandabschnitt ein Ausknicken in diese Richtung begünstigt wird.

Es hat sich gezeigt, dass eine derartige Knickfedereinrichtung in besonders vorteilhafter Weise zur Verwendung in einem Werkzeugspannsystem zum Einspannen von drehenden Werkzeugen in ein Spannfutter geeignet ist. Die Erfindung betrifft demzufolge auch ein Werkzeugspannsystem mit zwei entgegen einer Federkraft relativ zueinander in einer axialen Richtung verlagerbaren Werkzeugspannsystemkomponenten, zwischen denen eine Axialfedereinrichtung angeordnet ist, wobei eine erste Werkzeugspannsystemkomponente eine in axialer Richtung mittig angeordnete Welle aufweist und eine zweite Werkzeugspannsystemkomponente relativ zu der ersten Werkzeugspannsystemkomponente drehbar gelagert ist und in axialer Richtung mindestens abschnittsweise die mittig angeordnete Welle der ersten Werkzeugspannsystemkomponente umgibt.

Erfindungsgemäß ist vorgesehen, dass die Axialfedereinrichtung eine Knickfedereinrichtung mit den vorangehend beschriebenen Merkmalen und Eigenschaften aufweist. Beim Betrieb einer Werkzeugmaschine mit dem erfindungsgemäßen Werkzeugspannsystem wird das in dem Werkzeugspannsystem eingespannte Werkzeug in eine Drehbewegung versetzt, wobei das Werkzeugspannsystem mit der gleichen Drehzahl wie das Werkzeug rotiert. Eine in geeigneter Weise ausgestaltete erfindungsgemäße Knickfedereinrichtung weist einen geringen Verschleiß und eine sehr geringe Unwucht auf, so dass eine präzise Bearbeitung eines Werkstücks mit Hilfe des mit hohen Umdrehungszahlen rotierenden Werkzeugs ermöglicht wird.

Gemäß einer besonders vorteilhaften Ausgestaltung des Erfindungsgedankens ist vorgesehen, dass die Knickfedereinrichtung auf der mittig angeordneten Welle drehbar relativ zu der ersten Werkzeugspannsystemkomponente gelagert ist. Alternativ oder zusätzlich dazu ist weiterhin vorgesehen, dass die Knickfedereinrichtung auf der mittig angeordneten Welle drehbar relativ zu der zweiten Werkzeugspannsystemkomponente gelagert ist. Durch die drehbare Lagerung der Knickfedereinrichtung an dem Werkzeugspannsystem lassen sich der Verschleiß und die Unwucht zusätzlich reduzieren und einige aus der Praxis bekannte Nachteile vermeiden, die bei einer Verwendung von herkömmlichen Axialfedereinrichtungen auftreten können.

Verschiedene Ausgestaltungen des Erfindungsgedankens werden in den nachfolgenden Ausführungsbeispielen exemplarisch erläutert. Es zeigt:
Fig. 1 eine perspektivische Ansicht einer aus dem Stand der Technik bekannte Knickstabfedereinrichtung,
Fig. 2 eine Schnittansicht der in Fig. 1 gezeigten Knickstabfedereinrichtung längs der Linie II-II in Fig. 1,
Fig. 3 eine perspektivische Ansicht einer erfindungsgemäßen Ausgestaltung einer Knickfedereinrichtung,
Fig. 4 eine Seitenansicht der in Fig. 3 gezeigten Knickfedereinrichtung in einem unbelasteten Zustand,
Fig. 5 eine Schnittansicht der in Fig. 4 gezeigten Knickfedereinrichtung längs einer Linie V-V in Fig. 4,
Fig. 6 eine Seitenansicht der in Fig. 3 gezeigten Knickfedereinrichtung in einem druckbelasteten Zustand,
Fig. 7 eine Schnittansicht der in Fig. 6 gezeigten Knickfedereinrichtung längs einer Linie VII-VII in Fig. 6,
Fig. 8 eine perspektivische Ansicht einer abweichenden Ausgestaltung einer erfindungsgemäßen Knickfedereinrichtung,
Fig. 9 eine Seitenansicht der in Fig. 8 gezeigten Knickfedereinrichtung in einem unbelasteten Zustand,
Fig. 10 eine Schnittansicht der in Fig. 9 gezeigten Knickfedereinrichtung längs einer Linie X-X in Fig. 9,
Fig. 11 eine Seitenansicht der in Fig. 8 gezeigten Knickfedereinrichtung in einem druckbelasteten Zustand,
Fig. 12 eine Schnittansicht der in Fig. 11 gezeigten Knickfedereinrichtung längs einer Linie XII-XII in Fig. 11,
Fig. 13 eine perspektivische Ansicht einer Aufnahmeeinrichtung in isolierter Darstellung,
Fig. 14 eine Draufsicht auf die in Fig. 13 gezeigte Aufnahmeeinrichtung, und
Fig. 15 eine Schnittansicht der in den Fig. 13 und 14 gezeigten Aufnahmeeinrichtung längs einer Linie XV-XV in Fig. 14.

Bei einer aus dem Stand der Technik bekannten und in den Figuren 1 und 2 dargestellten Knickfedereinrichtung 1 sind mehrere Knickstäbe 2 zwischen zwei in axialer Richtung beabstandet zueinander angeordneten ringförmigen Aufnahmeeinrichtungen 3, 4 konzentrisch um eine Mittenachse 5 der Knickfedereinrichtung 1 angeordnet. Die einzelnen Knickstäbe 2 weisen eine streifenförmige Formgebung mit einer Ausbuchtung und einer Verdickung in einem mittleren Bereich 6 der Knickstäbe zwischen den beiden Aufnahmeeinrichtungen 3, 4 auf. Durch die Formgebung wird die Knickrichtung, bzw. die Richtung, in welcher jeweils eine Auslenkung des mittleren Bereichs 6 eines jeden Knickstabs 2 erfolgt, vorgegeben.

Für einen exemplarisch herausgegriffenen Knickstab 2 sind dessen Knickrichtung 7 sowie eine diesem Knickstab 2 zugeordnete Zentralrichtung 8 und eine Tangentialrichtung 9 durch Pfeile dargestellt. Die Zentralrichtung 8 verläuft ausgehend von einer Mittenachse 10 des Knickstabs 2 in Richtung der Mittenachse 5 der Knickfedereinrichtung. Die Tangentialrichtung 9 verläuft in tangentialer Richtung durch einen der Mittenachse 10 des Knickstabs 2 nächstgelegenen Punkt auf einer äußeren Umfangslinie 11 der Aufnahmeeinrichtung 4. Die Knickrichtung 7 des exemplarisch herausgegriffenen Knickstabs 2 verläuft parallel zu der Tantentialrichtung 9.

Ein radial außenliegender Rand des Knickstabs 2 weist einen Abstand zu der äußeren Umfangslinie 11 der Aufnahmeeinrichtung 4 auf. Dennoch wird der mittlere Bereich 6 des Knickstabs 2 bereits bei einer geringen Druckbelastung in der Knickrichtung 7 über die äußere Umfangslinie 11 hinaus ausgelenkt, so dass der mittlere Bereich 6 über eine von der äußeren Umfangslinie 11 begrenzte Grundfläche 12 hinausragt. Der für eine Verwendung bei üblichen Druckbelastungen der Knickfedereinrichtung 1 erforderliche Einbauraum ist demzufolge größer als der für eine unbelastete Knickfedereinrichtung 1 erforderliche Einbauraum.

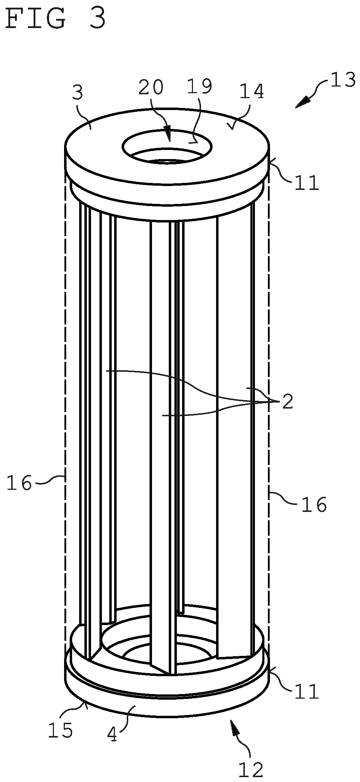

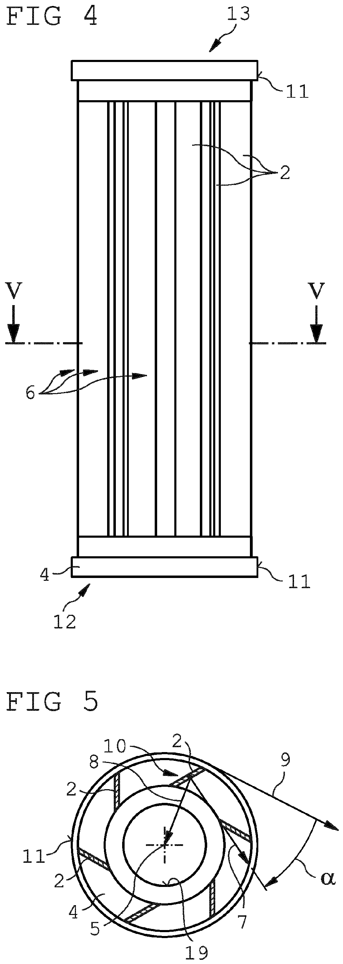

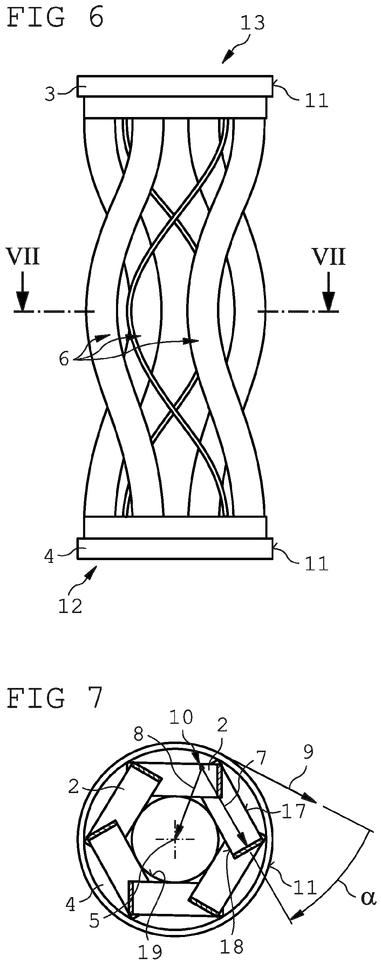

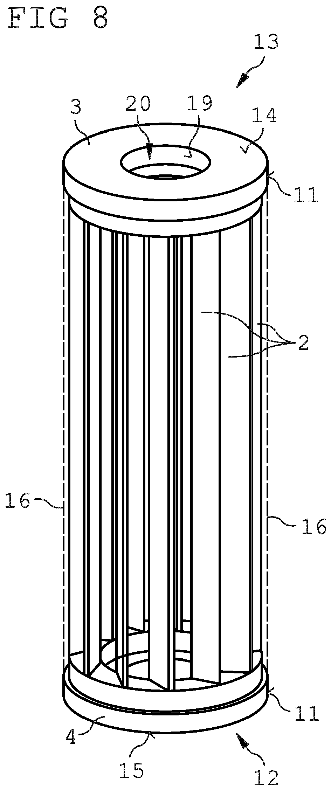

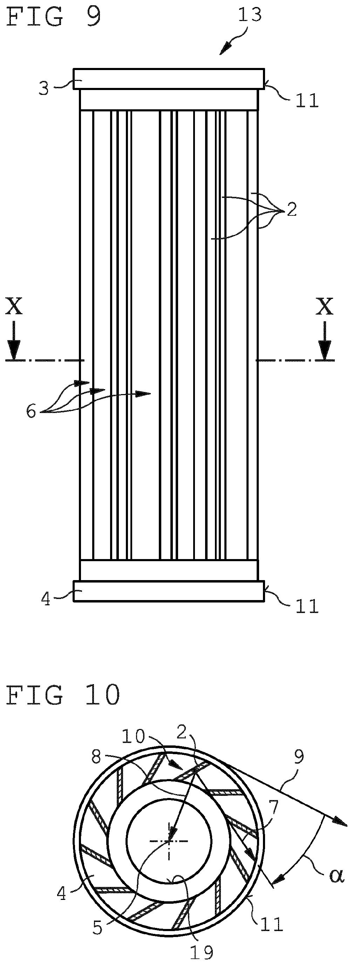

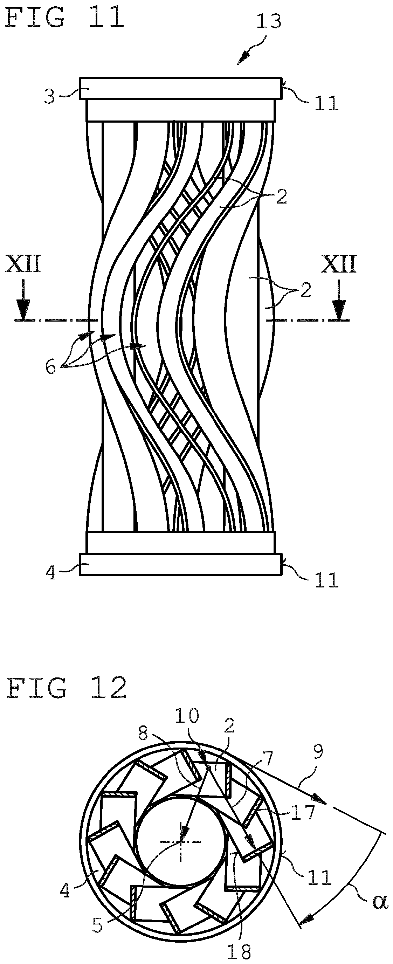

In den Figuren 3 bis 15 sind exemplarisch zwei verschiedene Ausführungsbeispiele für eine erfindungsgemäße Knickfedereinrichtung 13 dargestellt. Bei dem in den Figuren 3 bis 7 gezeigten Ausführungsbeispiel sind sechs Knickstäbe 2 in Umfangsrichtung gleichmäßig zueinander beabstandet zwischen den beiden Aufnahmeeinrichtungen 3, 4 angeordnet. Bei dem in den Figuren 8 bis 15 dargestellten Ausführungsbeispiel sind zwölf Knickstäbe 2 in Umfangsrichtung gleichmäßig zueinander beabstandet zwischen den beiden Aufnahmeeinrichtungen 3, 4 angeordnet.

In beiden Fällen sind die Knickstäbe 2 jeweils streifenförmig ausgestaltet und weisen eine über die gesamte Mittenachse 10 der Knickstäbe 2 gleichmäßig große rechteckförmige Querschnittsfläche auf. Die Knickstäbe 2 sind aus einem Kunststofffaserverbundmaterial hergestellt. Die Aufnahmeeinrichtungen 3, 4 können ebenfalls aus einem Kunststofffaserverbundmaterial oder aber aus Metall oder Kunststoff hergestellt sein.

Die Knickrichtung 7 der Knickstäbe 2 verläuft jeweils in einem Winkelbereich zwischen der Zentralrichtung 8 und der Tangentialrichtung 9, wobei in beiden Ausführungsbeispielen die Knickrichtung 7 einen Winkel α von etwa 30° bis 40° zur Tangentialrichtung 9 aufweist. Durch die von der Tangentialrichtung 9 abweichend ausgerichtete Knickrichtung 7 ragen die mittleren Bereiche 6 der Knickstäbe 2 auch bei einer großen Auslenkung, bzw. bei einer großen Einfederung der Knickfedereinrichtung 13 in radialer Richtung nicht über die äußere Umfangslinie 11 hinaus, so dass der für einen unbelasteten Zustand der Knickfedereinrichtungen 13 erforderliche Einbauraum nicht überschritten wird und auch bei einer üblichen Druckbelastung der Knickfedereinrichtung 13 und einer dadurch bewirken Ausknickung der einzelnen Federstäbe 2 ausreicht.

Die beiden ringförmigen Aufnahmeeinrichtungen 3, 4 bilden Stirnflächen 14, 15 eines Hohlzylinders, dessen in den Figuren 3 und 8 gestrichelt angedeuteter Außenradius 16 dem radialen Abstand der äußeren Umfangslinie 11 von der Mittenachse 5 der Knickfedereinrichtung 13 entspricht.

Die Knickrichtung 7 der einzelnen Federstäbe 2 ist so vorgegeben, dass bei einer maximal zulässigen Ausknickung oder einer dementsprechenden Druckbelastung radial außenliegende Seitenkanten 17 der mittleren Bereiche 6 der Knickstäbe 2 in radialer Richtung lediglich bis an die äußere Umfangslinie 11 der Aufnahmeeinrichtungen 3, 4 heranragen, jedoch nicht darüber hinausragen.

Radial innenliegende Seitenkanten 18 der mittleren Bereiche 6 der Knickstäbe 2 ragen in einem druckbelasteten Zustand bis an einen Innenradius 19 des Hohlzylinders heran, so dass der Innenradius 19 eine koaxiale zylinderförmige Ausnehmung 20 längs der Mittenachse 5 des Knickfedereinrichtung 13 begrenzt, in welche die Knickstäbe 2 weder im unbelasteten Zustand noch im druckbelasteten Zustand hineinragen. Diese zylinderförmige Ausnehmung 20 ist demzufolge kein Bestandteil des für eine Verwendung der Knickfedereinrichtung 13 erforderlichen Einbauraums. Durch die Ausrichtung der Knickrichtung 7 der einzelnen Knickstäbe 2 können gleichzeitig die zylinderförmige Ausnehmung 20 möglichst groß und die äußere Umfangslinie 11 bzw. der Außenradius 16 des den Einbauraum der Knickfedereinrichtung 13 definierenden Hohlzylinders möglichst klein vorgegeben werden.

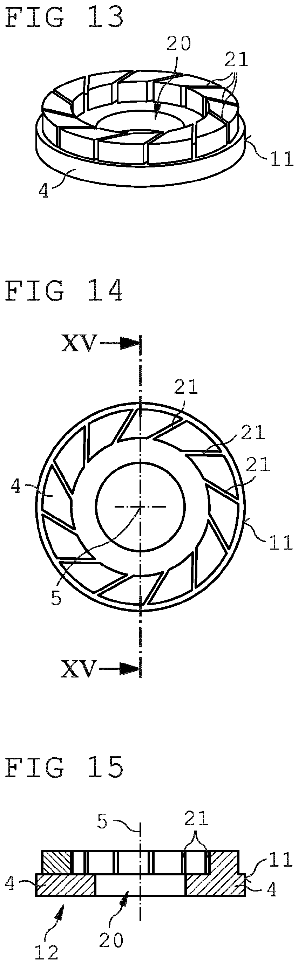

In den Figuren 13 bis 15 ist zur Veranschaulichung die untere Aufnahmeeinrichtung 4 der in den Figuren 8 bis 12 gezeigten Knickfedereinrichtung 13 abgebildet. In der ringförmigen Aufnahmeeinrichtung 4 sind quer zu der Knickrichtung 7 der Knickstäbe 2 verlaufende Schlitze 21 angeordnet, die als Lagereinrichtung zur klemmenden Aufnahme der Knickstäbe 2 dienen. Die Schlitze 21 ragen bis an die äußere Umfangslinie 11 der Aufnahmeeinrichtung 4 heran. Auf diese Weise können eine große Anzahl von Knickstäben 2 in Umfangsrichtung mit einem möglichst großen Abstand zueinander angeordnet werden. Durch die in einem Winkel zur Tangentenrichtung 9 verlaufende Knickrichtung 7 wird erreicht, dass die Knickstäbe 2 bei einer seitlichen Ausknickung nicht seitlich über die äußere Umfangslinie 11 hinausragen und dadurch einen Einbauraum erforderlich machen, der größer als die Grundfläche 12 wäre.

## Patentansprüche

1. Knickfedereinrichtung (13) mit einer ersten ringförmigen Aufnahmerichtung (3) und mit einer längs einer Mittenachse (5) der Knickfedereinrichtung (13) beabstandet angeordneten zweiten Aufnahmeeinrichtung (4), zwischen denen mehrere Knickstäbe (2) konzentrisch um die Mittenachse (5) angeordnet sind, wobei jeder Knickstab (2) an seinen beiden Enden jeweils in einer zugeordneten Lagereinrichtung in den Aufnahmeeinrichtungen (3, 4) festgelegt ist und wobei bei einer axialen Druckbelastung der Knickfedereinrichtung (13) die Knickstäbe (2) elastisch seitlich ausknicken, wobei durch eine Ausgestaltung der Knickstäbe (2) und durch eine davon abhängige Ausgestaltung der Lagereinrichtungen in den Aufnahmeeinrichtungen (3, 4) die seitliche Auslenkung der Knickstäbe (2) beim Ausknicken innerhalb eines für die unbelastete Knickfedereinrichtung (13) erforderlichen Einbauraums erfolgt, dass die seitliche Auslenkung jedes Knickstabs (2) in einer Knickrichtung (7) erfolgt, die in einem Winkelbereich zwischen einer von einer Mittenachse (10) des Knickstabs (2) radial nach innen zur Mittenachse (5) der Knickfedereinrichtung (13) gerichteten Zentrumsrichtung (8) und einer an einem zur Mittenachse (10) des Knickstabs (2) nächstliegenden Punkt einer äußeren Umfangslinie (11) der Aufnahmeeinrichtung (3, 4) tangential gerichteten Tangentenrichtung (9) verläuft, **dadurch gekennzeichnet, dass** die Knickrichtung (7) in einem Winkelbereich zwischen 20° und 70°, vorzugsweise zwischen 30° und 50° relativ zu der Tangentenrichtung (9) verläuft.

2. Knickfedereinrichtung (13) nach Anspruch 1, **dadurch gekennzeichnet, dass** die beiden Aufnahmeeinrichtungen (3, 4) Stirnflächen (14, 15) eines Hohlzylinders bilden und die seitliche Auslenkung der Knickstäbe (2) innerhalb des Hohlzylinders erfolgt, so dass dessen Innenradius (19) bei einem vorgegebenen Außenradius (16) möglichst groß ist.

3. Knickfedereinrichtung (13) nach einem der vorangehenden Ansprüche, **dadurch gekennzeichnet, dass** jede Lagereinrichtung der Knickstäbe (2) bis an eine äußere Umfangslinie (11) der zugeordneten Aufnahmeeinrichtung (3, 4) ragt.

4. Knickfedereinrichtung (13) nach einem der vorangehenden Ansprüche, **dadurch gekennzeichnet, dass** die Knickstäbe (2) streifenförmig ausgestaltet sind und in ihren beiden Endbereichen jeweils eine gleichbleibende quaderförmige Querschnittsfläche aufweisen.

5. Knickfedereinrichtung (13) nach einem der vorangehenden Ansprüche, **dadurch gekennzeichnet, dass** jeder Knickstab (2) mindestens abschnittsweise längs seiner Mittenachse (10) eine Krümmung oder Verdickung aufweist, durch welche die Knickrichtung (7) vorgegeben wird.

6. Knickfedereinrichtung (13) nach einem der vorangehenden Ansprüche, **dadurch gekennzeichnet, dass** die Lagereinrichtungen in einem der Knickrichtung (7) gegenüberliegenden Umfangsbereich jeweils ein seitlich an dem zugeordneten Knickstab (2) anliegendes Anschlagelement aufweisen, das eine seitliche Auslenkung des Knickstabs (2) in dieser Richtung verhindert.

7. Werkzeugspannsystem mit zwei entgegen einer Federkraft relativ zueinander in einer axialen Richtung verlagerbaren Werkzeugspannsystemkomponenten, zwischen denen eine Axialfedereinrichtung angeordnet ist, wobei eine erste Werkzeugspannsystemkomponente eine in axialer Richtung mittig angeordnete Welle aufweist und eine zweite Werkzeugspannsystemkomponente relativ zu der ersten Werkzeugspannsystemkomponente drehbar gelagert ist und in axialer Richtung mindestens abschnittsweise die mittig angeordnete Welle der ersten Werkzeugspannsystemkomponente umgibt, und wobei das Werkzeugspannsystem zum Einspannen von drehenden Werkzeugen in ein Spannfutter geeignet ist, **dadurch gekennzeichnet, dass** die Axialfedereinrichtung eine Knickfedereinrichtung (13) gemäß einem der Ansprüche 1 bis 8 aufweist.

8. Werkzeugspannsystem nach Anspruch 7, **dadurch gekennzeichnet, dass** die Knickfedereinrichtung (13) auf der mittig angeordneten Welle drehbar relativ zu der ersten Werkzeugspannsystemkomponente gelagert ist.

9. Werkzeugspannsystem nach Anspruch 6 oder Anspruch 7, **dadurch gekennzeichnet, dass** die Knickfedereinrichtung (13) auf der mittig angeordneten Welle drehbar relativ zu der zweiten Werkzeugspannsystemkomponente gelagert ist.

## Claims

1. Buckling spring device (13) having a first annular receiving device (3) and having a second receiving device (4) arranged spaced apart along a centre axis (5) of the buckling spring device (13), between which a plurality of buckling rods (2) are arranged concentrically about the centre axis (5), wherein each buckling rod (5) is fixed at both its ends in an associated bearing device in the receiving devices (3, 4) and wherein, when an axial pressure load acts on the buckling spring device (13), the buckling rods (2) buckle resiliently sideways, wherein, as a result of a configuration of the buckling rods (2) and as a result of a configuration, dependent thereon, of the bearing devices in the receiving devices (3, 4), and the sideways deflection of the buckling rods (2) on buckling takes place within an installation space required for the unloaded buckling spring device (13), the sideways deflection of each buckling rod (2) takes place in a buckling direction (7) which runs in an angle range between a centre direction (8) directed radially inwards from centre axis (10) of the buckling rod (2) to the centre axis (5) of the buckling spring device (13) and a tangent direction (9) directed tangentially to a point of an outer circumferential line (11) of the receiving device (3, 4) that is closest to the centre axis (10) of the buckling rod (2), **characterised in that** the buckling direction (7) runs in an angle range between 20° and 70°, preferably between 30° and 50°, relative to the tangent direction (9).

2. Buckling spring device (13) according to claim 1, **characterised in that** the two receiving devices (3, 4) form end faces (14, 15) of a hollow cylinder, and the sideways deflection of the buckling rods (2) takes place within the hollow cylinder, so that the inside radius (19) thereof is as large as possible for a given outside radius (16).

3. Buckling spring device (13) according to any one of the preceding claims, **characterised in that** each bearing device of the buckling rods (2) projects as far as an outer circumferential line (11) of the associated receiving device (3, 4).

4. Buckling spring device (13) according to any one of the preceding claims, **characterised in that** the buckling rods (2) are in strip form and each have a constant cross-sectional surface of quadrangular form in their two end regions.

5. Buckling spring device (13) according to any one of the preceding claims, **characterised in that** each buckling rod (2) has at least in a portion along its centre axis (10) a bend or thickening, by means of which the buckling direction (7) is predetermined.

6. Buckling spring device (13) according to any one of the preceding claims, **characterised in that** the bearing devices each have, in a circumferential region on the opposite side from the buckling direction (7), a stop element laterally abutting the associated buckling rod (2), which stop element prevents the buckling rod (2) from being deflected sideways **in that** direction.

7. Tool clamping system having two tool clamping system components which are displaceable relative to one another in an axial direction against a spring force and between which an axial spring device is arranged, wherein a first tool clamping system component has a shaft arranged centrally in the axial direction and a second tool clamping system component is rotatably mounted relative to the first tool clamping system component and surrounds the centrally arranged shaft of the first tool clamping system component in the axial direction at least in part, and wherein the tool clamping system is suitable for clamping rotating tools in a chuck, **characterised in that** the axial spring device comprises a buckling spring device (13) according to any one of claims 1 to 8.

8. Tool clamping system according to claim 7, **characterised in that** the buckling spring device (13) is rotatably mounted on the centrally arranged shaft relative to the first tool clamping system component.

9. Tool clamping system according to claim 6 or claim 7, **characterised in that** the buckling spring device (13) is rotatably mounted on the centrally arranged shaft relative to the second tool clamping system component.

## Revendications

1. Dispositif à ressort pliable (13) avec un premier dispositif de réception (3) de forme annulaire et avec un deuxième dispositif de réception (4) disposé à distance le long d'un axe central (5) du dispositif à ressort pliable (13), entre lesquels plusieurs barres pliables (2) sont disposées de manière concentrique autour de l'axe central (5), dans lequel chaque barre pliable (2) est fixée au niveau de ses deux extrémités respectivement dans un dispositif de support associé dans les dispositifs de réception (3, 4) et dans lequel, en cas de contrainte axiale liée à une pression exercée sur le dispositif à ressort pliable (13), les barres pliables (2) se fléchissent latéralement de manière élastique, dans lequel du fait d'une configuration des barres pliables (2) et du fait d'une configuration dépendante des dispositifs de support dans les dispositifs de réception (3, 4), la déviation latérale des barres pliables (2) a lieu lors du fléchissement à l'intérieur d'un espace de montage requis pour le dispositif à ressort pliable (13) non soumis à une contrainte, la déviation latérale de chaque barre pliable (2) a lieu dans une direction de pliage (7), qui s'étend dans une plage angulaire entre une direction centrale (8) dirigée depuis un axe central (10) de la barre pliable (2) radialement vers l'intérieur vers l'axe central (5) du dispositif à ressort pliable (13) et une direction tangentielle (9) dirigée de manière tangentielle au niveau d'un point, situé le plus proche par rapport à l'axe central (10) de la barre pliable (2), d'une ligne périphérique (11) extérieure du dispositif de réception (3, 4),
**caractérisé en ce que**
la direction de pliage (7) s'étend dans une plage angulaire entre 20° et 70°, de préférence entre 30° et 50° par rapport à la direction tangentielle (9).

2. Dispositif à ressort pliable (13) selon la revendication 1, **caractérisé en ce que** les deux dispositifs de réception (3, 4) forment des surfaces frontales (14, 15) d'un cylindre creux et la déviation latérale des barres pliables (2) a lieu à l'intérieur du cylindre creux si bien que son rayon intérieur (19) est aussi grand que possible dans le cas d'un rayon extérieur (16) prédéfini.

3. Dispositif à ressort pliable (13) selon l'une quelconque des revendications précédentes, **caractérisé en ce que** chaque dispositif de support des barres pliables (2) dépasse jusqu'au niveau d'une ligne périphérique (11) extérieure du dispositif de réception (3, 4) associé.

4. Dispositif à ressort pliable (13) selon l'une quelconque des revendications précédentes, **caractérisé en ce que** les barres pliables (2) sont configurées en forme de bande et présentent dans leurs deux zones d'extrémité respectivement une surface de section transversale constante de forme parallélépipédique.

5. Dispositif à ressort pliable (13) selon l'une quelconque des revendications précédentes, **caractérisé en ce que** chaque barre pliable (2) présente au moins par endroits le long de son axe central (10) une incurvation ou une surépaisseur, par laquelle la direction de pliage (7) est prédéfinie.

6. Dispositif à ressort pliable (13) selon l'une quelconque des revendications précédentes, **caractérisé en ce que** les dispositifs de support présentent dans une zone périphérique opposée à la direction de pliage (7) respectivement un élément de butée appliqué latéralement au niveau de la barre pliable (2) associée, qui empêche une déviation latérale de la barre pliable (2) dans ladite direction.

7. Système de serrage d'outil avec deux composants de système de serrage d'outil pouvant être déplacés à l'encontre d'une force de ressort l'un par rapport à l'autre dans une direction axiale, entre lesquels un dispositif à ressort axial est disposé, dans lequel un premier composant de système de serrage d'outil présente un arbre disposé au centre dans une direction axiale et un second composant de système de serrage d'outil est monté de manière à pouvoir tourner par rapport au premier composant de système de serrage d'outil et entoure dans une direction axiale au moins par endroits l'arbre disposé au centre du premier composant de système de serrage d'outil, et dans lequel le système de serrage d'outil est adapté pour enserrer des outils rotatifs dans un mandrin de serrage, **caractérisé en ce que** le dispositif à ressort axial présente un dispositif à ressort pliable (13) selon l'une quelconque des revendications 1 à 8.

8. Système de serrage d'outil selon la revendication 7, **caractérisé en ce que** le dispositif à ressort pliable (13) est monté sur l'arbre disposé au centre de manière à pouvoir tourner par rapport au premier composant de système de serrage d'outil.

9. Système de serrage d'outil selon la revendication 6 ou la revendication 7, **caractérisé en ce que** le dispositif à ressort pliable (13) est monté sur l'arbre disposé au centre de manière à pouvoir tourner par rapport au second composant de système de serrage d'outil.
